# EUROPÄISCHE PATENTSCHRIFT

(11) **EP 3 394 335 B1**
(45) Veröffentlichungstag und Bekanntmachung des Hinweises auf die Patenterteilung: **24.06.2020**
(21) Anmeldenummer: 17717702.9
(22) Anmeldetag: 13.04.2017
(51) Int. Cl.: D04H 3/02, D03D 1/00, D03D 15/00

(54) **INDUSTRIELLES GEWEBE, INSBESONDERE TRANSPORTBAND**
INDUSTRIAL WOVEN FABRIC, IN PARTICULAR TRANSPORT BELT
TISSU INDUSTRIEL, NOTAMMENT BANDE TRANSPORTEUSE

(30) Priorität: 27.04.2016 DE 102016107811
(43) Veröffentlichungstag der Anmeldung: 31.10.2018
(73) Patentinhaber: AstenJohnson PGmbH, 4700 Eupen (BE)
(72) Erfinder: MONNERIE, Jean-Louis, 87200 Saint-Junien (FR); KUCKART, Dieter, 4700 Eupen (BE)
(74) Vertreter: Bauer, Dirk
(86) Internationale Anmeldenummer: PCT/EP2017/058947
(87) Internationale Veröffentlichungsnummer: WO 2017/186512

(56) Entgegenhaltungen:
- WO-A1-03/031711
- DE-A1- 10 346 246
- GB-A- 2 492 644

## Beschreibung

Die Erfindung betrifft eine Anlage zur Herstellung eines Vliesstoffs, die Anlage aufweisend ein Transportband zum Transport einer Bahn eines Vliesstoffs insbesondere während dessen Herstellung oder dessen Handlings in der Anlage , mit einer Produktseite, die mit dem Vliesstoff in Kontakt steht, und einer Maschinenseite, die mit Transporteinrichtungen der Anlage in Kontakt steht, wobei das Transportband in Laufrichtung der Bahn des Vliesstoffs verlaufende Längsfäden und senkrecht dazu verlaufende Querfäden aufweist, die miteinander verwebt sind.

Typischerweise bilden die Kettfäden des Transportbands dessen Längsfäden und die Schussfäden dessen Querfäden, was allerdings nicht zwingend ist. Es ist alternativ nämlich auch möglich, dass das Transportband endlos gewebt ist und dann die Kettfäden die Querfäden bilden und die Schussfäden die Längsfäden des Transportbands. Häufig werden die Längsfäden des fertigen Transportbands auch als MD-Fäden (Machine Direction-Fäden) und die Querfäden als CMD-Fäden (Cross Machine Direction-Fäden) bezeichnet.

### Stand der Technik

Vliesstoffe, so genannte "non-wovens" oder "non-woven fabrics" (oder franz. "non-tisse") werden typischerweise unmittelbar aus Fasern hergestellt, ohne dass, wie bei klassischen textilen Flächengebilden, zuvor zur Fadenherstellung und -verarbeitung die Schritte des Webens, Strickens oder Wirkens angewendet werden. Wenn in dieser Anmeldung von Vliesstoff gesprochen wird, so ist darunter ein Gebilde aus Fasern begrenzter Länge, Endlosfasern (Filamenten) oder geschnittenen Garnen jeglicher Art und jeglichen Ursprungs zu verstehen, die auf irgend eine Weise zu einem Vlies (eine Faserschicht, einem Faserflor) zusammengefügt und auf irgendeine Weise miteinander verbunden sind. Am weitesten verbreitet ist dabei die Herstellung von so genannten "Spinnvliesstoffen (spunbond)" oder "schmelzgesponnenen Vliesstoffen (meltblown)". Bei der Herstellung dieser Vliesstoffe werden die gerade extrudierten und verstreckten Fasern auf einem Transportband abgelegt, um so eine flächige Bahn, nämlich den späteren Vliesstoff, zu bilden, wobei die Fasern in diesem Moment in einem heißen und klebrigen Zustand sind, weshalb sie aneinander haften und eine zusammenhängende Vliesstoffbahn bilden. Alternativ ist auch das Verfahren des so genannten "Luftlegens (airlaying)" bekannt, worin die Vliesstoffbahn nach der Faserablagerung verfestigt wird, und zwar unter Anwendung eines mechanischen Vernadelungsschritts oder einer Wasserstrahlbeaufschlagung.

Die bei dem Herstellungsprozess der Vliesstoffe verwendeten Transportbänder spielen für die Qualität des Vliesstoffs und die Zuverlässigkeit des Produktionsablaufs eine entscheidende Rolle. Typischerweise bestehen die Transportbänder aus Geweben aus Kunststoffmonofilamenten, wobei alternativ auch Metallgewebe zum Einsatz kommen können, wenn die Temperaturbedingungen bei der Vliesstoffherstellung den Einsatz von kunststoffbasierten Transportbändern nicht zulassen. Meist haben die verwendeten Kunststoffmonofilamente oder Metallfäden eine glatte Oberfläche, weshalb auch die davon gebildeten Oberflächenbereiche des gewebten Transportbandes entsprechend glatt sind. Eine glatte Oberfläche kann bei der Vliesstoffherstellung zu Problemen beim Herstellungsprozess führen, was insbesondere aus einer Relativbewegung zwischen den Fasern des Vliesstoffs und der Oberfläche des Transportbandes, also einem "Durchrutschen" ("slippage"), resultiert. Eine gewisse Haftung der Vlieslage an dem Transportband ist aber wichtig, da ein gleichmäßiger Abzug bzw. Abtransport für eine konstante Produktion und hochwertige Produktqualität nötig ist. Dies spielt vor allem angesichts steigender Maschinengeschwindigkeiten eine wichtige Rolle. Andererseits darf die Haftung der Fasern nicht zu groß sein, da es sonst an der Abgabeposition nicht zur Weiterführung, d.h. Übergabe auf das nächste Transportband, kommt.

Aus der US 6,790,796 B2 ist ein Transportband bekannt, das bei der Herstellung von Vliesstoffen verwendet werden soll, bei dem Fäden verwendet werden, die eine raue Oberfläche besitzen und auf diese Weise ein Durchrutschen des zu bildenden Vliesstoffs verhindern sollen. So können die bewusst rauen Fäden beispielsweise in Form von strukturierten, z.B. gerillten, Monofilamenten oder aber auch in Form von gezwirnten Garnen ausgeführt sein. Auch kann es vorgesehen sein, dass die Rauheit und damit der Anti-Durchrutsch-Effekt richtungsabhängig ist, d.h. nur in Laufrichtung des Transportbandes auftritt. Ferner ist auch ein optionaler Seele-Mantel-Aufbau der die Rauigkeit aufweisenden Fäden vorgeschlagen.

Auch wenn durch die bekannte verbesserte Rauigkeit der Faden- bzw. Transportbandoberfläche gemäß der US 6,790,796 B2 die Gefahr des Durchrutschens gegenüber glatteren Fäden bzw. Bandoberflächen reduziert wird, ist das Verhalten der bekannten Transportbänder im Produktionsprozess noch nicht zufriedenstellend.

Aus der DE 103 46 246 A1 ist ein Papiermaschinenfilz, enthaltend Kombinationszwirne sowie ein Verfahren zur Herstellung eines solchen Papiermaschinenfilzes bekannt.

Beschrieben wird insbesondere ein Basisgewebe, aus dem mit Hilfe weiterer Herstellungsschritte eine Bespannung für Papiermaschinen oder ein Textil für andere industrielle Verfahren erzeugt werden soll. Das Basisgewebe umfasst mindestens ein Kombinationsgarn aus Filamenten, die aus Polyamid und thermoplastischem Polyurethan hergestellt sind. So soll das bekannte Basisgewebe mit einem oder mehreren Faservliesen vollflächig benadelt werden, um auf diese Weise ein Pressfilz zur Verwendung in der Pressenpartie einer Papiermaschine zu erhalten. Das Basisgewebe als solches, das die thermoplastischen Polyurethanfäden enthält, ist nicht zum direkten Einsatz vorgesehen, sondern bedarf stets der Aufbringung weiterer Schichten. Bei der Verwendung des Basisgewebes für die Herstellung eines Pressfilzes soll mit dem thermoplastischen Polyurethan in dem mittleren Basisgewebe die Wasseraufnahmekapazität erhöht und die Elastizität und Kompressibilität des Pressfilzes in Dickenrichtung verbessert werden.

Ferner offenbart die DE 10 2007 047 880 A1 eine Papiermaschinenbespannung, die entweder als Pressfilz oder als Trockensieb verwendet werden soll. Die Kernidee bei dieser bekannten Papiermaschinenbespannung besteht darin, in Längsrichtung der zu einem Gewebe verbundenen Fäden einen variierenden Filamentdurchmesser vorzusehen. Die verwendeten Fäden weisen darüber hinaus einen Kern-Mantel-Aufbau auf, wobei der Fadenkern zum Beispiel aus Polyamid besteht und die Längskräfte aufnehmen soll, wohingegen der Fadenmantel aus einem thermoplastischen Elastomer, insbesondere einem thermoplastischen Polyurethan besteht. Auch wenn der Fadenmantel mit der zu transportierenden Papierbahn in Berührung kommen kann, ist das thermoplastische Elastomer deshalb gewählt worden, um eine verbesserte Dämpfung gegenüber Schwingungen in der Bespannung während des Betriebs der Papiermaschine zu erreichen.

Schließlich beschreibt die DE 20 53 624 A1 noch ein Gewebe für Riemen oder Förderbänder, bei dem ein lastaufnehmendes innenliegendes Verstärkungsgewebe mit einem die Bandoberflächen bildenden Matrixmaterial in Form eines Gummis beschichtet wird. Um die Verbindung, insbesondere den Zusammenhalt, zwischen dem Verstärkungsgewebe und dem Beschichtungsmaterial zu verbessern, werden die Fäden des Verstärkungsgewebes vor der Beschichtung mit dem Matrixmaterial mit einem Mantel aus Natur- oder Synthesekautschuk oder Polyurethan oder Mischungen der vorgenannten Materialien versehen. Die vorerwähnten Mantelmaterialien kommen nach Aufbringen des Beschichtungsmaterials, d.h. im fertigen Zustand des Riemens oder Förderbandes, nicht mit dem auf dem Förderband transportierten Material in Kontakt, da sie sich lediglich im Inneren des Förderbandes befinden.

### Aufgabe

Der Erfindung liegt die Aufgabe zugrunde, eine Anlage zur Herstellung eines Vliesstoffs mit einem Transportband zum Transport einer Bahn eines Vliesstoffs während dessen Herstellung oder Handlings, vorzuschlagen, bei der die Gefahr eines Durchrutschens zwischen der transportierten Bahn und dem Transportband weiter reduziert wird.

### Lösung

Ausgehend von einer Anlage der eingangs beschriebenen Art wird die vorgenannte Aufgabe dadurch gelöst, dass zumindest Teilbereiche der auf der Produktseite des Transportbands liegenden Oberfläche mindestens eines Teils der Längsfäden und/oder Querfäden aus einem Polymermaterial bestehen, das zumindest einen Anteil eines thermoplastischen Elastomers enthält.

Im Gegensatz zu der US 6,790,796 B2 beruht die Wirksamkeit des Transportbands der erfindungsgemäßen Anlage in Bezug auf den Anti-Durchrutsch-Effekt nicht allein auf Eigenschaften der Oberflächenstruktur, d.h. insbesondere geometrischen Eigenschaften, sondern zumindest auch auf besonderen stofflichen Eigenschaften, d.h. Eigenschaften, die losgelöst von der Rauigkeit die Haftung zwischen den Fasern der Vliesstoffbahn und der Oberfläche des Transportbandes begünstigen. Auf diese Weise wird ein erhöhter Reibungsbeiwert bzw. -koeffizient erzielt, der ein Durchrutschen, d.h. eine Relativbewegung zwischen Transportband und Vliesstoffbahn, verhindert. In Versuchen konnte festgestellt werden, dass die Stabilität des Produktionsprozesses zur Herstellung einer Vliesstoffbahn mit Transportbändern auf Basis der erfindungsgemäßen Anlage gegenüber dem Stand der Technik erhöht werden konnte.

Grundsätzlich ist eine Vielzahl von Bindungsarten für das Transportband der erfindungsgemäßen Anlage denkbar. Um unterschiedlichen Anforderungen an das Transportband im Hinblick auf die Produktseite einerseits und die Maschinenseite andererseits gerecht werden zu können, kann es vorteilhaft sein, dass mindestens zwei Lagen von Längsfäden vorhanden sind, die paarweise gestapelt über- bzw. untereinander angeordnet sind und Produktseiten-Längsfäden und Nicht-Produktseiten-Längsfäden bilden. In diesem Fall können die Produktseiten-Längsfäden speziell im Hinblick auf die Hafteigenschaften optimiert werden, um den Durchrutsch-Effekt zu minimieren, wohingegen die Nicht-Produktseiten-Längsfäden beispielsweise in Bezug auf die mechanischen Eigenschaften des Transportbands maßgeschneidert sein können, um beispielsweise eine besonders hohe Zugfestigkeit des Transportbandes sowie eine hohe Abrasionsbeständigkeit und damit lange Lebensdauer zu gewährleisten. Durch die paarweise gestapelte Anordnung der beiden Lagen der Längsfäden ist trotz dieser typischerweise als Kettfäden ausgeführten Längsfäden eine vergleichsweise geringe Dicke des Transportbands realisierbar.

Bei einer Ausführungsform der erfindungsgemäßen Anlage besitzt das Transportband eine einzige Lage von Querfäden, wobei vorzugsweise abwechselnd jeweils ein Querfaden mit einem größeren Durchmesser und ein Querfadem mit einem kleineren Durchmesser in Richtung der Längsfäden hintereinander angeordnet sind. Weiter vorzugsweise binden die Querfäden mit dem kleineren Durchmesser mit den Längsfäden ab, wohingegen die Querfäden mit dem größeren Durchmesser zwischen den Produktseiten-Längsfäden und den Nicht-Produktseiten-Längsfäden hindurchlaufen und eine Art "Füllfäden" bilden. Bei dieser Bindungsart ergibt sich ein Transportband mit einer besonders glatten Oberfläche, die gleichwohl aufgrund der erfindungsgemäßen Materialeigenschaften zumindest auf der Produktseite sehr gute Hafteigenschaften aufweist.

Einerseits ist es möglich, in dem Transportband der erfindungsgemäßen Anlage auf der Produktseite Längs- und/oder Querfäden zu verwenden, die einen Querschnitt besitzen, der jeweils vollständig aus einem Material besteht. Alternativ ist es aber auch möglich, dass ein jeweiliger Querschnitt der Produktseiten-Längsfäden und/oder der Produktseiten-Querfäden mindestens zwei Bereiche aufweist, von denen ein erster Bereich aus dem besagten thermoplastischen Elastomer mit besonderen Hafteigenschaften besteht und ein zweiter Bereich aus einem anderen Material, wobei von dem zweiten Bereich ein wesentlicher, vorzugsweise überwiegender, Anteil einer auf den jeweiligen Produktseiten-Längsfäden einwirkenden Zugkraft übertragbar ist.

Bei einer wie vorstehend geschilderten Aufteilung des Gesamtquerschnitts kann es sinnvoll sein, dass der Querschnitt der Produktseiten-Längsfäden einen ersten Bereich in Form eines Mantels und einen zweiten Bereich in Form einer Seele aufweist, wobei der Mantel die Seele umschließt. In diesem Fall lassen sich sowohl Festigkeitseigenschaften (durch die Seele) und Verschleißfestigkeit sowie auch Hafteigenschaften (durch den Mantel) des Fadens gut miteinander kombinieren, wobei es aufgrund der Ummantelung mit dem Material mit den guten Hafteigenschaften auf eine Orientierung des Fadens innerhalb des Transportbands nicht ankommt, was die Herstellung des Transportbands der erfindungsgemäßen Anlage vereinfacht und insbesondere auch die Verwendung von Fäden mit runder Außenkontur erlaubt.

Gemäß einer Weiterbildung der Erfindung ist vorgesehen, dass die Produktseiten-Längsfäden und/oder die Produktseiten-Querfäden koextrudiert und/oder in zwei nacheinander folgenden Schritten extrudiert sind, wobei in letztgenanntem Fall in einem ersten Schritt die Seele extrudiert wird und in einem zweiten Schritt der im Querschnitt vorzugsweise ringförmige Mantel um die Seele extrudiert bzw. beschichtet wird. Alternativ ist es auch möglich, dass zwei Querschnittsbereiche des jeweiligen Fadens nebeneinander extrudiert werden, in Form einer so genannten "Side-By-Side-Extrusion". Dies ist sowohl für im Querschnitt runde Fäden möglich, wobei die Teilquerschnitte dann vorzugsweise Halbkreise bilden, aber auch für flache Fäden, die dann vorzugsweise aus zwei ebenfalls flachen Teilquerschnitten in "gestapelter" Anordnung zusammengesetzt sind.

Bei Längsfäden und/oder Querfäden mit einem abgeflachten, vorzugsweise rechteckförmigen, Querschnitt kann ein Verhältnis von einer Höhe des Querschnitts zu einer Breite des Querschnitts von vorzugsweise zwischen 1:1,2 und 1:10, weiter vorzugsweise zwischen 1:1,5 und 1:4, betragen.

Bei einer besonderen Ausführungsform des Transportbands der erfindungsgemäßen Anlage besitzt zumindest ein Teil der Längsfäden einen runden Querschnitt und besteht zumindest ein Teilbereich der Oberfläche dieser Längsfäden aus einem thermoplastischen Elastomer, wobei vorzugsweise mehrere identische Längsfäden mit jeweils rundem Querschnitt parallel nebeneinander verlaufen und den gleichen Pfad durch das Transportband beschreiben. Auf diese Weise lässt sich die Gefahr eines Durchrutschens zwischen Transportband und der Vliesstoffbahn weiter reduzieren, weil zusätzlich zu den die Hafteigenschaften begünstigenden Materialeigenschaften auch noch eine gewisse Oberflächenrauigkeit des Transportbands der erfindungsgemäßen Anlage hinzukommt, die durch die "Auflösung" eines flachen, breiten Längsfadens in eine Mehrzahl schmalerer (runder) Längsfäden erhöht wird. Bei der Herstellung von Vliesstoffen bestehen je nach konkretem Herstellverfahren sowie der jeweiligen Materialeigenschaften der Spinnfasern sowie der Materialeigenschaften anderer Fäden des Transportbands unterschiedliche Anforderungen, an die Hafteigenschaften der gemäß der vorliegenden Erfindung gestalteten "Haftfäden". So ist es möglich, durch Einzelfäden, die vorzugsweise in einem bestimmten Wiederholmuster in die Bindungsart des Transportbands integriert sind, die Haftung innerhalb bestimmter Grenzen je nach Wunsch einzustellen. So könnten beispielsweise eine bestimmte Anzahl von Kettfäden und/oder auch Schussfäden ein thermoplastisches Elastomer aufweisen, hingegen die übrigen Kett- und/oder Schussfäden aus einem anderen Material, insbesondere aus Polyester, bestehen. So ist es gut denkbar, dass beispielsweise jeder zweite, jeder dritte, jeder vierte oder jeder fünfte Kett- und/oder Schussfaden ein thermoplastisches Elastomer aufweist. Es liegt somit vorzugsweise ein regelmäßiges Wiederholmuster (Rapport) in der Struktur des Transportbands vor. Dabei können die Fäden, die das thermoplastische Elastomer aufweisen, alle sämtlich den gleichen Fadenverlauf besitzen, aber auch auf unterschiedlichen Wegen durch das Transportband verlaufen, wie beispielsweise bei einem Transportband mit unterschiedlichen Arten von Schussfäden, wobei bei jeder Art eine gewisse Anzahl von Fäden das thermoplastische Elastomer aufweist. Wie bereits weiter oben ausgeführt, ist eine Maximierung der Hafteigenschaften nicht anzustreben, da dann die Gefahr einer zu schlechten Ablösung des Vliesstoffs und eine mangelhafte Übergabe der Vliesstoffbahn auf das nächste Transportband erfolgt.

Vorzugsweise sind die Längsfäden und/oder die Querfäden Monofilamente, weiter vorzugsweise bestehen sie vollständig aus Kunststoff. Es ist aber auch denkbar, dass die Längsfäden und/oder Querfäden eine Metalldrahtseele besitzen, um die sich ein aus Kunststoffmaterial, insbesondere aus thermoplastischen Elastomer, bestehender Mantel erstreckt.

Um statische Aufladungen während der Herstellung eines Vliesstoffs zu vermeiden und elektrische Ladungen von dem Transportband abführen zu können, kann ein Teil der Längsfäden und/oder der Querfäden elektrisch leitend sein, insbesondere
- an einem äußeren Mantel des Querschnitts der betreffenden Fäden Kohlenstoff aufweisen, insbesondere mit einer Kohlenstoffbeschichtung versehen sein, und/oder
- das Polymermaterial der betreffenden Fäden, vorzugsweise in homogener Verteilung, Kohlenstoff-Nanoröhren enthalten, vorzugsweise in einem Anteil von mindestens 15 Gew.-%, weiter vorzugsweise von mindestens 20 Gew.-%.

Besonders gute Hafteigenschaften lassen sich erzielen, wenn das thermoplastische Elastomer ein
- Block-Copolymer mit abwechselnd weichen und harten Segmenten ist, oder
- eine Mischung/Legierung eines gummiartigen Polymers mit einem thermoplastischen Polymer oder
- eine Zusammensetzung aus einem gummiartigen Polymer und einem thermoplastischen Polymer mit einem hochgradig vulkanisierten/vernetzten gummiartigen Polymer in einem fein dispers verteilten thermoplastischen Polymer.

Insbesondere kann das thermoplastische Elastomer
- ein Styren-Block-Copolymer, insbesondere ein Styren-Butadien-Styren oder
- ein thermoplastisches Polyolefin, insbesondere eine Mischung/Legierung aus Polypropylen und vernetztem EPDM-Gummi, oder
- ein thermoplastisches Vulkanisat, insbesondere eine Mischung aus Polypropylen und Ethylen-Propylen-Dien (EPDM)-Kautschuk, wobei die beiden letztgenannten Komponenten während des Compoundierungsvorgangs dynamisch vulkanisiert/vernetzt sind, oder
- ein thermoplastisches Polyurethan, insbesondere basierend auf einem Polyester-Urethan oder einem Polyether-Urethan, oder
- ein thermoplastisches Copolyester oder
- ein durch Schmelzen verarbeitbarer EPDM-Kautschuk oder
- ein thermoplastisches Polyether-Block-Amid, vorzugsweise mit Amidverbindungen zwischen harten und weichen Segmenten, oder
- ein ionomerisches thermoplastisches Elastomer sein.

Ein endlos gewebtes Transportband der erfindungsgemäßen Anlage muss vor Verwendung als Transportband zu einem "endlosen" Band bzw. Gurt zusammengefügt werden, wenn es nicht bereits webtechnisch als Schlauch hergestellt wurde. Typischerweise erfolgt das Zusammenschließen des zu einem Band zu formenden Abschnitts des Transportbands mit Hilfe einer Naht. Diese Naht kann beispielsweise eine Spiralnaht sein, die sich über die gesamte Breite des Transportbandes erstreckende Nahtspiralen aufweist, die jeweils in Schlingen von Längsfäden jeweils der sich gegenüber liegenden Enden des Transportbands eingedreht oder eingehängt sind und beide mittels eines sich über die gesamte Breite des Transportbandes erstreckenden Schließdrahtes miteinander gekoppelt sind. Alternativ zur Ausbildung als Spiralnaht kann die Naht aber auch als Kettschlingennaht, wiederum mit einem oder mehreren Schließdrähten, oder als geschweißte Naht ausgebildet sein. Dabei kommt beispielsweise eine geschweißte Naht unter Anwendung z.B. des Laserschweißens oder des Ultraschallschweißens in Frage. Das Transportband kann mittels einer solchen Naht entweder irreversibel verschlossen werden, aber auch reversibel, indem beispielsweise Nahtelemente, die mittels eines Schließdrahts reversibel zu öffnen und zu schließen sind, mit Hilfe eines Verschweißens mit den jeweils gegenüberliegenden Enden des Transportbands irreversibel verbunden werden (s. WO 2011/069259 A1, WO 2011/069258 A1 und WO 2010/121360 A1).

Im Falle einer Spiralnaht können die Nahtspiralen gleichfalls jeweils aus einem Faden bestehen, dessen Querschnitt mindestens zwei Bereiche, nämlich beispielsweise zum einen in Form einer Seele und zum anderen in Form eines die Seele umschließenden Mantels oder auch in anderen Querschnittsaufteilungen, aufweist, wobei der der Produktseite zugewandte Bereich, insbesondere der Mantel, vorzugsweise aus einem thermoplastischen Elastomer besteht. In diesem Fall sind die Hafteigenschaften des Transportbandes über seine gesamte Umlauflänge gleich, so dass auch in dem Nahtbereich die Gefahr eine Durchrutschens nicht erhöht ist.

### Ausführungsbeispiele

Die Erfindung wird nachfolgend anhand dreier Ausführungsbeispiele von Transportbändern erfindungsgemäßer Anlagen zur Herstellung eines Vliesstoffs näher erläutert.

Es zeigt:
- Figur 1:: einen Längsschnitt durch eine erste Ausführungsform eines Transportbands einer erfindungsgemäßen Anlage,
- Figur 2:: eine perspektivische Ansicht einer zweiten Ausführungsform eines Transportbands einer erfindungsgemäßen Anlage,
- Figur 3:: eine dritte Ausführungsform eines Transportbands einer erfindungsgemäßen Anlage in einer perspektivischen Darstellung und
- Figur 4:: einen Längsschnitt durch das Transportband gemäß Figur 3.

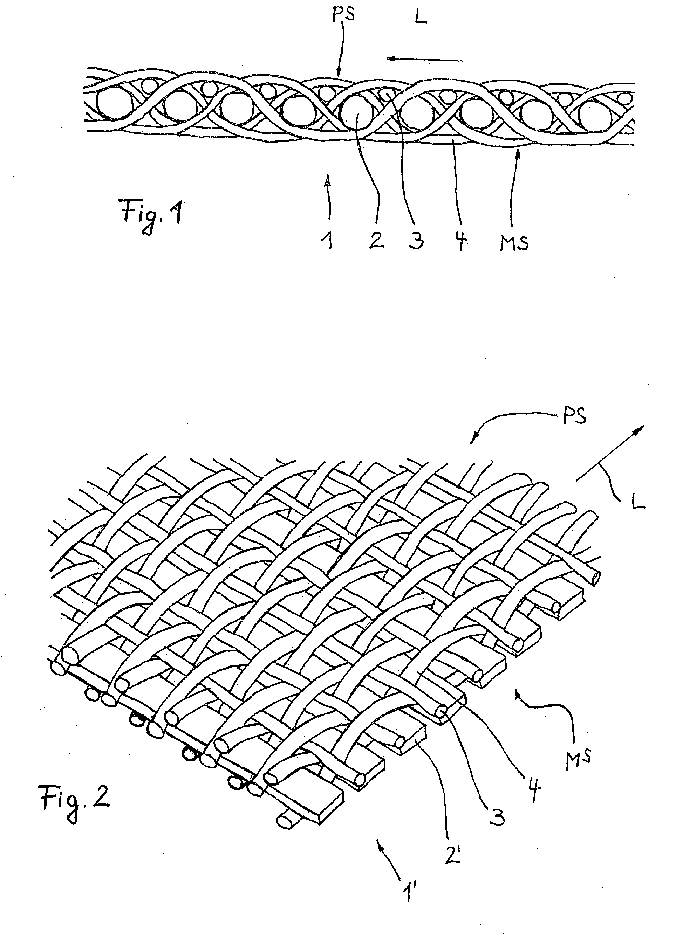

Figur 1 zeigt ein Transportband 1 für eine Anlage zur Herstellung eines Spinnvliesstoffs. Wie sich aus der Längsschnittdarstellung ergibt, ist das Transportband 1 einlagig ausgeführt und weist im Querschnitt runde Monofilamente 2 mit einem größeren Durchmesser auf, die eine einer Maschinenseite MS zugewandte untere Querfaden-Lage bilden, sowie Querfäden 3, die eine der Produktseite PS zugewandte obere Lage bilden. Die Querfäden 2 und 3 bilden jeweils Schussfäden des Transportbands 1.

Darüber hinaus weist das Transportband 1 Längsfäden 4 auf, die sich mit Flottierungen jeweils sowohl auf der Produktseite PS als auch auf der Maschinenseite MS des Transportbands 1 erstrecken. Beide Flottierungen sind gleich lang und erstrecken sich jeweils über drei Querfäden 2, 3. Die die Kettfäden des Transportbands 1 bildenden Längsfäden 4 besitzen gleichfalls einen runden Querschnitt, wobei der Durchmesser der Längsfäden 4 dem der Querfäden 3 mit dem kleineren Durchmesser entspricht.

Erfindungsgemäß können entweder alle Längsfäden 4 oder Querfäden 2, 3 ein thermoplastisches Elastomer aufweisen oder nur vereinzelte, wie z.B. jeder 3., 4. oder x-te Längsfaden. Denkbar ist auch, dass die ein thermoplastisches Elastomer aufweisenden Fäden nur in einem oder beiden Randbereich(en) oder nur im Mittelbereich des Transportbands angeordnet sind. In dem in Figur 1 dargestellten Transportband 1 bestehen die Längsfäden 4 größtenteils aus PET, wobei eine bestimmte Anzahl an Längsfäden 4 mit elektrisch leitenden Eigenschaften versehen ist. Jeder 4. Längsfaden 4 besteht aus einem thermoplastischen Elastomer in Form von Mantel-Seele-Fäden. Alternativ hierzu können diese Längsfäden 4 aber auch zu einem Anteil von bis zu 50 Gew.-% aus koextrudierten Fäden bestehen, wobei der übrige Anteil des Materials aus als monofil extrudierbaren Kunststoffen wie PET, PA, PPS, PEEK, PLA und/oder antistatischen sowie PU-haltigen Monofilamenten besteht. Der Reibungskoeffizient des Materials der Längsfäden 4 gegenüber Papier in Anlehnung an DIN 53375 liegt dabei zwischen 0,30 µ und 0,99 µ, vorzugsweise zwischen 0,30 µ und 0,80 µ, weiter vorzugsweise zwischen 0,40 µ und 0,70 µ. Auch wenn das Transportband 1 der erfindungsgemäßen Anlage zum Transport einer Vliesstoffbahn dient, ist der vorgenannte auf Papier bezogene Reibungskoeffizient aussagekräftig und das Intervall vorteilhaft. Die Querfäden 3, die sich gleichfalls zum Teil an der Produktseite des Transportbands 1 erstrecken bestehen (ebenfalls) aus Mantel-Seelen-Fäden bzw. zumindest zu einem Anteil von 50 Gew.-% aus koextrudierten Fäden wobei der äußere Mantel jeweils aus einem thermoplastischen Elastomer besteht. Die Querfäden 2 mit dem größeren Durchmesser bestehen in der Regel aus herkömmlichen als Monofil extrudierbaren Kunststoffen wie PET, PA, PPS, PEEK, PLA und/oder aus antistatischen sowie PU-haltigen Monofilamenten. Es kann jedoch auch vorgesehen werden, dass diese ganz oder teilweise aus thermoplastischen Elastomeren bestehen.

Die Längsfäden 4 des Transportbands 1' gemäß Figur 2 bestehen ebenfalls ganz oder teilweise aus thermoplastischem Elastomer, die Querfäden 3 besitzen wiederum denselben Durchmesser wie die Längsfäden 4 und bestehen aus demselben Material wie diese. Im Unterschied zu dem Transportband 1 gemäß Figur 1 sind die Querfäden 2' des Transportbands 1' gemäß Figur 2 mit einem abgeflachten, nämlich rechteckförmigen, Querschnitt versehen. Die flacheren Seiten dieser Querfäden 2' erstrecken sich parallel zu den Tangentialebenen an die beiden Oberflächen 1'. Die Oberfläche des Transportbands 1', die in Figur 2 sichtbar ist, bildet die Produktseite PS des Transportbands 1', die andere, nicht sichtbare Oberfläche, die Maschinenseite MS. Die abgeflachten Querfäden 2', die sich nicht bis an die die Produktseite PS bildende Oberfläche erstrecken, bestehen aus herkömmlichen als Monofil extrudierbaren Kunststoffen wie PET, PA, PPS, PEEK, PLA und/oder aus antistatischen sowie PU-haltigen Monofilamenten. Es kann jedoch auch vorgesehen werden, dass diese ganz oder teilweise aus thermoplastischen Elastomeren bestehen.

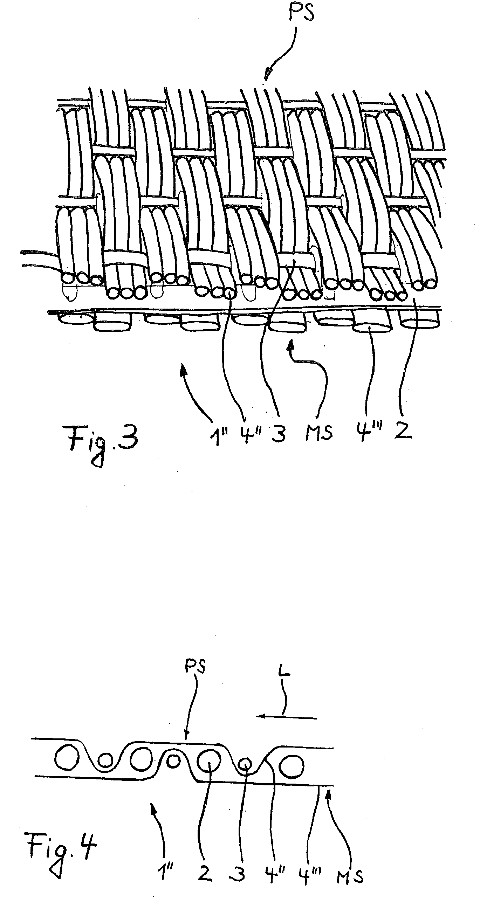

Im Gegensatz zu den in den Figuren 1 und 2 dargestellten Transportbändern 1 und 1' weist das aus Figur 3 ersichtliche Transportband 1" nur eine einzige Schusslage, hingegen zwei Kettlagen auf, die sich in vertikal übereinander gestapelter Anordnung in dem Transportband 1" befinden. Ein Längsschnitt durch das Transportband ist in Figur 4 dargestellt.

Eine obere Kettlage wird gebildet von Längsfäden 4", die jeweils in Dreiergruppen nebeneinander angeordnet sind, wobei alle Längsfäden 4" jeweils einer Dreiergruppe einen identischen Verlauf durch das Transportband 1" aufweisen (abgesehen von dem seitlichen Versatz um jeweils den Durchmesser eines Längsfadens 4"). Die Längsfäden 4" bilden eine der Produktseite PS zugewandte Oberfläche des Transportbands 1". Die Längsfäden 4" können aus unterschiedlichem Material sein, je nachdem wieviel Haftung erzeugt werden muss. Zu viel Haftung ist nachteilig, da der Vliesstoff nicht mehr abgegeben wird. Bei dem in den Figuren 3 und 4 dargestellten Ausführungsbeispiel ist jeweils der mittlere der drei eine 3er-Gruppe bildenden Längsfäden 4" aus einem thermoplastischen Elastomer, nämlich als Mantel-Seele-Faden oder als koextrudierter Faden ausgebildet. Auch andere Anteile zwischen den Längsfäden 4" aus thermoplastischem Elastomer und den übrigen Längsfäden 4", beispielsweise aus PET, sind denkbar.

Die der Maschinenseite MS zugewandten Längsfäden 4'" werden von bändchenartigen Monofilamenten gebildet, deren quer zur Laufrichtung L des Transportbands 1" gemessene Breite dem dreifachen Durchmesser der der Produktseite PS zugewandten Längsfäden 4" beträgt. Drei eine Gruppe bildende Längsfäden 4" und jeweils ein in vertikaler Ausrichtung darunter befindlicher Längsfaden 4'" befinden sich in gestapelter Anordnung innerhalb des Transportbands 1".

Das Transportband 1" weist lediglich eine einzige Schusslage auf, die abwechselnd von Querfäden 2 mit größerem Durchmesser und Querfäden 3 mit kleinerem Durchmesser gebildet wird. Die Querfäden 3 fungieren als so genannte "Bindeschüsse", mit denen die Längsfäden 4" und 4'" abbinden, wohingegen die Querfäden 2 mit größerem Durchmesser als Füllschüsse fungieren, die die Längsfäden 4", 4'" im Bereich der Flottierungen auf Abstand halten und für eine glatte Oberfläche sowohl auf der Produktseite PS als auch auf der Maschinenseite MS sorgen.

Die auf der Produktseite PS angeordneten Längsfäden 4" mit rundem Querschnitt bestehen ganz oder teilweise aus thermoplastischem Elastomer in Form von Mantel-Seele-Fäden oder koextrudierten Fäden. Hingegen bestehen die auf der Maschinenseite MS befindlichen Längsfäden 4'" aus herkömmlichen als Monofil extrudierbaren Kunststoffen wie PET, PA, PPS, PEEK, PLA und/oder aus antistatischen sowie PU-haltigen Monofilen. Es kann jedoch auch vorgesehen werden, dass diese ganz oder teilweise aus thermoplastischen Elastomeren bestehen. Die Querfäden 2 mit dem größeren Durchmesser bestehen in der Regel aus herkömmlichen als Monofil extrudierbaren Kunststoffen wie PET, PA, PPS, PEEK, PLA und/oder aus antistatischen sowie PU-haltigen Mnofilamenten. Es kann jedoch auch vorgesehen werden, dass diese ganz oder teilweise aus thermoplastischen Elastomeren bestehen. Die Querfäden 3, die sich gleichfalls zum Teil an der Produktseite des Transportbands 1 erstrecken, können ebenfalls ganz oder teilweise als Fäden aus einem thermoplastischen Elastomer ausgebildet werden.

### Bezugszeichenliste

- 1, 1', 1": Transportband
- 2: Querfäden
- 3: Querfäden
- 4, 4', 4", 4'": Längsfäden
- L: Laufrichtung
- MS: Maschinenseite
- PS: Produktseite

## Patentansprüche

1. Anlage zur Herstellung eines Vliesstoffs, die Anlage aufweisend ein Transportband (1, 1', 1") zum Transport einer Bahn aus Vliesstoff, mit einer Produktseite (PS), die mit dem Vliesstoff in Kontakt steht, und einer Maschinenseite (MS), die mit Transporteinrichtungen der Anlage in Kontakt steht, wobei das Transportband (1, 1', 1") in Laufrichtung (L) der Bahn des Vliesstoffs verlaufende Längsfäden (4, 4', 4", 4"') und senkrecht dazu verlaufende Querfäden (2, 3) aufweist, die miteinander verwebt sind, **dadurch gekennzeichnet, dass** zumindest Teilbereiche der der Produktseite (PS) des Transportbands (1, 1', 1") zugewandten Oberfläche mindestens eines Teils der Längsfäden und/oder Querfäden (2, 3) aus einem Polymermaterial bestehen, das zumindest einen Anteil eines thermoplastischen Elastomers enthält.

2. Anlage nach Anspruch 1, **dadurch gekennzeichnet, dass** mindestens zwei Lagen von Längsfäden (4", 4"') vorhanden sind, die paarweise gestapelt über- bzw. untereinander angeordnet sind und Produktseiten-Längsfäden (4") und Nicht-Produktseiten-Längsfäden bilden.

3. Anlage nach Anspruch 1 oder 2, **dadurch gekennzeichnet, dass** das Transportband (1") eine einzige Lage von Querfäden (2, 3) besitzt, wobei vorzugsweise abwechselnd jeweils ein Querfaden (2) mit einem größeren Durchmesser und ein Querfaden (3) mit einem kleineren Durchmesser in Richtung der Längsfäden (4", 4"') hintereinander angeordnet sind, wobei weiter vorzugsweise die Querfäden (3) mit dem kleineren Durchmesser mit den Längsfäden (4", 4"') abbinden und die Querfäden (2) mit dem größeren Durchmesser zwischen den Produktseiten-Längsfäden (4") und Nicht-Produktseiten-Längsfäden (4"') hindurch laufen.

4. Anlage nach einem der Ansprüche 1 bis 3, **dadurch gekennzeichnet, dass** ein jeweiliger Querschnitt der Produktseiten-Längsfäden (4") und/oder der Querfäden (2, 3) mindestens zwei Bereiche aufweist, von denen ein erster Bereich aus dem thermoplastischen Elastomer und ein zweiter Bereich aus einem anderen Material besteht, wobei von dem zweiten Bereich ein wesentlicher, vorzugsweise überwiegender, Anteil einer auf den jeweiligen Produktseiten-Längsfaden (4") einwirkenden Zugkraft übertragbar ist.

5. Anlage nach Anspruch 4, **dadurch gekennzeichnet, dass** der Querschnitt der Produktseiten-Längsfäden (4") und/oder von Querfäden (2, 3) einen ersten Bereich in Form eines Mantels und einen zweiten Bereich in Form einer Seele aufweist, wobei der Mantel die Seele umschließt.

6. Anlage nach Anspruch 4, **dadurch gekennzeichnet, dass** die Produktseiten-Längsfäden (4") koextrudiert oder in zwei nacheinander folgenden Schritten extrudiert sind, wobei in letztgenanntem Fall
- in einem ersten Schritt die Seele extrudiert wird und in einem zweiten Schritt der im Querschnitt vorzugsweise ringförmige Mantel um die Seele extrudiert bzw. beschichtet wird, und/oder
- zwei Bereiche des Querschnitts nebeneinander extrudiert sind, wobei die Bereiche entweder jeweils halbkreisförmig sind und insgesamt einen Kreisquerschnitt bilden oder jeweils einen flachen Querschnitt bilden und sich zu einem insgesamt flachen Fadenquerschnitt ergänzen.

7. Anlage nach einem der Ansprüche 1 bis 6, **dadurch gekennzeichnet, dass** die Längsfäden (4"') und/oder Querfäden (2, 3) einen abgeflachten, vorzugsweise rechteckförmigen, Querschnitt besitzen, wobei ein Verhältnis von einer Höhe des Querschnitts zu einer Breite des Querschnitts vorzugsweise zwischen 1:1,2 und 1:10, vorzugsweise zwischen 1:1,5 und 1:4, beträgt und/oder dass zumindest ein Teil der Längsfäden (4, 4") einen runden Querschnitt besitzt und zumindest ein Teilbereich der Oberfläche dieser Längsfäden (4, 4") aus einem thermoplastischen Elastomer besteht, wobei vorzugsweise mehrere identische Längsfäden (4") mit jeweils rundem Querschnitt parallel nebeneinander verlaufen und den gleichen Pfad durch das Transportband (1") beschreiben.

8. Anlage nach einem der Ansprüche 1 bis 7, **dadurch gekennzeichnet, dass** ein Teil der Längsfäden (4, 4", 4"') und/oder der Querfäden (2, 3) elektrisch leitend ist, insbesondere
- an einem äußeren Mantel des Querschnitts der betreffenden Fäden Kohlenstoff aufweist, insbesondere mit einer Kohlenstoffbeschichtung versehen ist, und/oder
- das Polymermaterial der betreffenden Fäden, vorzugsweise in homogener Verteilung, Kohlenstoff-Nanoröhren enthält, vorzugsweise in einem Anteil von mindestens 15 Gew.-%, weiter vorzugsweise von mindestens 20 Gew.-%.

9. Anlage nach einem der Ansprüche 1 bis 8, **dadurch gekennzeichnet, dass** das thermoplastische Elastomer ein
- Block-Copolymer mit abwechselnd weichen und harten Segmenten ist, oder
- eine Mischung oder Legierung eines gummiartigen Polymers mit einem thermoplastischen Polymer oder
- eine Zusammensetzung aus einem gummiartigen Polymer und einem thermoplastischen Polymer mit einem hochgradig vulkanisierten/vernetzten gummiartigen Polymer in einem fein dispers verteilten thermoplastischen Polymer.

10. Anlage nach Anspruch 9, **dadurch gekennzeichnet, dass** das thermoplastische Elastomer
- ein Styren-Block-Copolymer ist, insbesondere ein Styren-Butadien-Styren oder
- ein thermoplastisches Polyolefin, insbesondere eine Mischung/Legierung aus Polypropylen und vernetztem EPDM-Gummi, ist oder
- ein thermoplastisches Vulkanisat, insbesondere eine Mischung aus Polypropylen und Ethylen-Propylen-Dien (EPDM)-Kautschuk, ist wobei die beiden letztgenannten Komponenten während des Compoundierungsvorgangs dynamisch vulkanisiert/vernetzt sind oder
- ein thermoplastisches Polyurethan, insbesondere basierend auf einem Polyester-Urethan oder einem Polyether-Urethan, ist oder
- ein thermoplastisches Copolyester oder
- ein durch Schmelzen verarbeitbares EPDM-Kautschuk oder
- ein thermoplastisches Polyether-Block-Amid, vorzugsweise mit Amidverbindungen zwischen harten und weichen Segmenten, ist oder
- ein ionomerisches thermoplastisches Elastomer
ist.

11. Anlage nach einem der Ansprüche 1 bis 10, **dadurch gekennzeichnet, dass** das Transportband durch eine zwei Enden des Transportbands verbindende Naht zu einem endlosen Transportband geschlossen ist, wobei die Naht eine Spiralnaht ist, die zwei sich über die gesamte Breite des Transportbandes erstreckende Nahtspiralen aufweist, die jeweils in Schlingen von Längsfäden jeweils der sich gegenüber liegenden Enden des Transportbands, eingedreht oder eingehängt sind und beide mittels eines sich über die gesamte Breite des Transportbandes erstreckenden Schließdrahts miteinander gekoppelt sind, wobei vorzugsweise die Nahtspiralen jeweils aus einem Faden bestehen, dessen Querschnitt mindestens zwei Bereiche, nämlich zum einen in Form einer Seele und zum anderen in Form eines die Seele umschließenden Mantels aufweist, wobei der Mantel vorzugsweise aus einem thermoplastischen Elastomer besteht.

12. Anlage nach einem der Ansprüche 1 bis 11, **dadurch gekennzeichnet, dass** das Polymermaterial der das thermoplastische Elastomer enthaltenden Längsfäden (4, 4', 4", 4"') und/oder Querfäden gegenüber Papier einen Reibungskoeffizienten, gemessen in Anlehnung an DIN 53375, zwischen 0,3 µ und 0,99 µ, vorzugsweise zwischen 0,3 µ und 0,8 µ, weiter vorzugsweise zwischen 0,4 µ und 0,7 µ, aufweist.

13. Anlage nach einem der Ansprüche 1 bis 12, **dadurch gekennzeichnet, dass** höchstens jeder dritte, vorzugsweise höchstens jeder vierte, weiter vorzugsweise höchstens jeder sechste, noch weiter vorzugsweise höchstens jeder achte Produktseitenlängsfaden und/oder Querfaden zumindest in Teilbereichen der der Produktseite zugewandten Oberfläche aus einem Polymermaterial besteht, das zumindest einen Anteil eines thermoplastischen Elastomers enthält.

14. Verfahren zur Herstellung eines Flors, Vlieses oder Vliesstoffs, insbesondere durch Spinnvlies- oder Schmelzspinn-Verfahren, wobei mittels einer Anlage zur Herstellung eines Flors, Vlieses oder Vliesstoffs eine Bahn des Flors, Vlieses, Vliesstoffs auf einer Oberfläche eines Transportbandes gebildet und dabei bewegt wird, **dadurch gekennzeichnet, dass** das Verfahren mittels einer Anlage gemäß einem der Ansprüche 1 bis 13 durchgeführt wird.

15. Verwendung eines eine Produktseite (PS) und eine Maschinenseite (MS) aufweisendes Transportbands (1, 1', 1")zum Transport einer Bahn eines Flors, Vlieses, Vliesstoffs während dessen Herstellung, insbesondere während dessen Bildung im Wege eines Spinnvlies- oder Schmelzspinn-Verfahrens, in einer Anlage gemäß einem der Ansprüche 1 bis 13.

## Claims

1. A system for producing a nonwoven fabric, wherein the system includes a transport belt (1, 1', 1") for transporting a web of nonwoven fabric, which belt has a product side (PS) which is in contact with the nonwoven fabric, and a machine side (MS) which is contact with transport devices of the system, wherein the transport belt (1, 1', 1") has longitudinal threads (4, 4', 4", 4''') extending in the travel direction (L) of the web of nonwoven fabric and transverse threads (2, 3) extending perpendicularly thereto, which longitudinal and transverse threads are woven together, **characterized in that** at least partial regions of the surface of at least some of the longitudinal threads and/or transverse threads (2, 3) that faces the product side (PS) of the nonwoven fabric (1, 1', 1") consist of a polymer material that contains at least a fraction of a thermoplastic elastomer.

2. The system according to Claim 1, **characterized in that** at least two plies of the longitudinal threads (4", 4''') are present, which are arranged in stacks one on top of the other and form product side longitudinal threads (4") and non-product side longitudinal threads.

3. The system according to Claim 1 or 2, **characterized in that** the transport belt (1") includes a single ply of transverse threads (2, 3), wherein one transverse thread (2) with a larger diameter and one transverse thread (3) with a smaller diameter are preferably each arranged alternatingly one behind the other in the direction of the longitudinal threads (4", 4'"), wherein further preferably the transverse threads (3) with the smaller diameter are interlaced with the longitudinal threads (4", 4''') and the transverse threads (2) with the larger diameter pass between the product side longitudinal threads (4") and the non-product side longitudinal threads (4"').

4. The system according to any one of Claims 1 to 3, **characterized in that** a respective cross-section of the product side longitudinal threads (4") and/or of the transverse threads (2, 3) has at least two regions, of which a first region consists of the thermoplastic elastomer and a second region consists of another material, wherein a substantial, preferably a predominant portion of a tensile force acting on the respective product side longitudinal threads (4") is transferable by the second region.

5. The system according to Claim 4, **characterized in that** the cross-section of the product side longitudinal threads (4") and/or of transverse threads (2, 3) includes a first region in the form of a sheath and a second region in the form of a core, wherein the sheath surrounds the core.

6. The system according to Claim 4, **characterized in that** the product side longitudinal threads (4") are coextruded or extruded in two consecutive steps, wherein in the latter case
- in a first step the core is extruded and in a second step the sheath, which preferably has an annular cross-section, is extruded around or coated over the core, and/or
- two regions of the cross-section are extruded side by side, wherein either each region is semicircular in shape and together a cross-section is formed or they each form a flat cross-section and complement each other to create an overall flat thread cross-section.

7. The system according to any one of Claims 1 to 6, **characterized in that** the longitudinal threads (4"') and/or transverse threads (2, 3) have a flattened, preferably rectangular cross-section, wherein a ratio between a height of the cross-section and a width of the cross-section preferably has a value between 1:1.2 and 1:10, preferably between 1:1.5 and 1:4, and/or that at least some of the longitudinal threads (4, 4") have a round cross-section and at least a partial region of the surface of these longitudinal threads (4, 4") is made from a thermoplastic elastomer, wherein preferably a plurality of identical longitudinal threads (4"), each having a round cross-section, extend parallel side by side parallel to each other and following the same path through the transport belt (1").

8. The system according to any one of Claims 1 to 7, **characterized in that** a part of the longitudinal threads (4, 4", 4"') and/or of the transverse threads (2, 3) is electrically conductive, in particular
- has carbon on an outer sheath of the cross-section of the threads in question, in particular is furnished with a carbon coating, and/or
- the polymer material of the threads in question contains carbon nanotubes, preferably distributed homogeneously, preferably in a proportion of at least 15 wt.%, more preferably at least 20 wt.%.

9. The system according to any one of Claims 1 to 8, **characterized in that** the thermoplastic elastomer is a
- block copolymer with alternating soft and hard segments, or
- a mixture or alloy of a rubbery polymer with a thermoplastic polymer, or
- a compound of a rubbery polymer and a thermoplastic polymer with a highly vulcanised/cross-linked rubbery polymer in a finely dispersed thermoplastic polymer.

10. The system according to Claim 9, **characterized in that** the thermoplastic elastomer is
- a styrene block copolymer, particularly a styrene-butadiene-styrene block copolymer, or
- a thermoplastic polyolefin, particularly a mixture/alloy of polypropylene and cross-linked EPDM rubber, or
- a thermoplastic vulcanisate, particularly a mixture of polypropylene and ethylene-propylenediene monomer (EPDM) rubber, wherein the last two of the abovementioned components are dynamically vulcanised/crosslinked during the compounding process, or
- a thermoplastic polyurethane, particularly based on a polyester urethane or a polyether urethane, or
- a thermoplastic copolyester or
- an EPDM rubber which is processable by melting, or
- a thermoplastic polyether block amide, preferably with amide coupling agents between hard and soft segments, or
- an ionomeric thermoplastic elastomer.

11. The system according to any one of Claims 1 to 10, **characterized in that** the transport belt is closed to form an endless transport belt by a seam which joins two ends of the transport belt, wherein the seam is a spiral seam including two seam spirals which extend over the entire width of the transport belt, and each being wound or twisted into loops of longitudinal threads of respectively opposite ends of the transport belt, and both being coupled to each other by means of a closure wire which extends over the entire width of the transport belt, wherein the seam spirals preferably each consists of a thread whose cross-section includes at least two regions, that is to say on the one hand in the form of a core and on the other hand in the form of a sheath surrounding the core, wherein the sheath preferably consists of a thermoplastic elastomer.

12. The system according to any one of Claims 1 to 11, **characterized in that** the polymer material of the longitudinal threads (4, 4', 4", 4"') and/or transverse threads that contain the thermoplastic elastomer has a coefficient of friction with paper between 0.3 µ and 0.99 µ, preferably between 0.3 µ and 0.8 µ, more preferably between 0.4 µ and 0.7 µ, as measured in accordance with DIN 53375.

13. The system according to any one of Claims 1 to 12, **characterized in that** at most every third, preferably at most every fourth, more preferably at most every sixth, still more preferably at most every eighth product side longitudinal thread and/or transverse thread consists of a polymer material at least in partial regions of the surface facing the product side, which polymer material includes at least a fraction of a thermoplastic elastomer.

14. A Method for producing a pile fabric, a nonwoven or nonwoven fabric, particularly by spunbonding or melt spinning processes, wherein a web of the pile fabric, nonwoven or nonwoven fabric is formed and transported on a surface of transport belt by means of a system for producing a pile fabric, nonwoven or nonwoven fabric, **characterized in that** the method is carried out by means of a system according to any one of Claims 1 to 13.

15. Use of a transport belt (1, 1', 1") having a product side (PS) and a machine side (MS) for transporting a web of a pile fabric, nonwoven or nonwoven fabric during the manufacture thereof, particularly during formation thereof by means of a spunbonding or melt spinning process, in a system according to any one of Claims 1 to 13.

## Revendications

1. Installation, destinée à la fabrication d'un non-tissé, l'installation comportant une bande de transport (1, 1', 1") pour le transport d'une nappe en non-tissé, pourvue d'un côté produit (PS), qui est en contact avec le non-tissé, et d'un côté machine (MS), qui est en contact avec des systèmes de transport de l'installation, la bande de transport (1, 1', 1") comportant des fils longitudinaux (4, 4', 4", 4"') s'écoulant dans la direction de défilement (L) de la nappe de non-tissé et des fils transversaux (2, 3) s'écoulant à la perpendiculaire de ceux-ci, qui sont entremêlés les uns avec les autres, **caractérisée en ce qu'**au moins des zones partielles de la surface qui fait face au côté produit (PS) de la bande de transport (1, 1', 1") d'au moins une partie des fils longitudinaux et/ou des fils transversaux (2, 3) sont constituées d'une matière polymère qui contient au moins une proportion d'un élastomère thermoplastique.

2. Installation selon la revendication 1, **caractérisée en ce qu'**au moins deux couches de fils longitudinaux (4", 4"') sont présentes, qui sont placées au-dessus ou en-dessous l'une de l'autre, en étant empilées par paire et forment des fils longitudinaux (4") du côté produit et des fils longitudinaux du côté non-produit.

3. Installation selon la revendication 1 ou 2, **caractérisée en ce que** la bande de transport (1") détient une seule couche de fils transversaux (2, 3), de préférence en alternance, respectivement un fil transversal (2) d'un diamètre plus important et un fil transversal (3) d'un diamètre plus faible étant placés l'un derrière l'autre dans la direction des fils longitudinaux (4", 4"'), de manière préférentielle par ailleurs, les fils transversaux (3) du plus faible diamètre étant liés avec les fils longitudinaux (4", 4"') et les fils transversaux (2) de diamètre plus important s'écoulant à travers les fils longitudinaux (4") du côté produit et les fils longitudinaux (4"') du côté non-produit.

4. Installation selon l'une quelconque des revendications 1 à 3, **caractérisée en ce qu'**une section transversale respective des fils longitudinaux (4") du côté produit et/ou der fils transversaux (2, 3) comporte au moins deux zones, dont une première zone est constituée de l'élastomère thermoplastique et une deuxième zone est constituée d'une autre matière, à partir de la deuxième zone étant transmissible une proportion essentielle, de préférence majeure d'une force de traction agissant sur le fil longitudinal (4") respectif du côté produit.

5. Installation selon la revendication 4, **caractérisée en ce que** la section transversale des fils longitudinaux (4") du côté produit et/ou de fils transversaux (2, 3) comporte une première zone sous la forme d'une enveloppe et une deuxième zone sous la forme d'une âme, le manteau enrobant l'âme.

6. Installation selon la revendication 4, **caractérisée en ce que** les fils longitudinaux (4") du côté produit sont coextrudés ou extrudés en deux étapes consécutives, dans le dernier cas cité
- dans une première étape, l'âme étant extrudée et dans une deuxième étape, le manteau de préférence de forme annulaire dans la section transversale étant extrudé ou revêtu autour de l'âme, et/ou
- deux zones de la section transversale étant extrudées côte à côte, les zones étant soit respectivement de forme semi-circulaire et formant dans l'ensemble une section transversale circulaire ou formant respectivement une section transversale plate et se complétant en une section transversale plate dans l'ensemble.

7. Installation selon l'une quelconque des revendications 1 à 6, **caractérisée en ce que** les fils longitudinaux (4"') et/ou les fils transversaux (2, 3) détiennent une section transversale aplatie, de préférence rectangulaire, un rapport d'une hauteur de la section transversale à une largeur de la section transversale se situant de préférence entre 1 : 1,2 et 1 : 10, de préférence entre 1 : 1,5 et 1 : 4, et/ou **en ce qu'**au moins une partie des fils longitudinaux (4, 4") détient une section transversale ronde et au moins une zone partielle de la surface desdits fils longitudinaux (4, 4") est constituée d'un élastomère thermoplastique, de préférence plusieurs fils longitudinaux (4") identiques de section transversale respectivement ronde s'écoulant à la parallèle côte à côte et décrivant le même chemin à travers la bande de transport (1").

8. Installation selon l'une quelconque des revendications 1 à 7, **caractérisée en ce qu'**une partie des fils longitudinaux (4, 4", 4"') et/ou des fils transversaux (2, 3) est conductrice d'électricité, notamment
- comporte du carbone sur une enveloppe extérieure de la section transversale des fils concernés, est notamment munie d'un revêtement de carbone, et/ou
- la matière polymère des fils concernés contient de préférence en distribution homogène des nanotubes de carbone, de préférence dans une proportion d'au moins 15 % en poids, de manière plus préférentielle, d'au moins 20 % en poids.

9. Installation selon l'une quelconque des revendications 1 à 8, **caractérisée en ce que** l'élastomère thermoplastique
- est un copolymère séquencé pourvu de segments mous et durs en alternance ou
- est un mélange ou un alliage d'un polymère caoutchouteux avec un polymère thermoplastique ou
- est une composition d'un polymère caoutchouteux et d'un polymère thermoplastique avec un polymère caoutchouteux fortement vulcanisé/réticulé dans un polymère thermoplastique distribué en dispersion fine.

10. Installation selon la revendication 9, **caractérisée en ce que** l'élastomère thermoplastique
- est un copolymère de styrène séquencé, notamment un styrène-butadiène-styrène ou
- est une polyoléfine thermoplastique, notamment un mélange/alliage de polypropylène et de caoutchouc EPDM réticulé ou
- est un produit vulcanisé thermoplastique, notamment un mélange de polypropylène et de caoutchouc d'éthylènepropylène-diène (EPDM), les deux derniers composants cités étant vulcanisés/réticulés de manière dynamique pendant le processus de compoundage ou
- est un polyuréthane thermoplastique, notamment à base d'un polyester-uréthane ou d'un polyéther-uréthane ou
- est un copolyester thermoplastique ou
- est un caoutchouc EPDM susceptible d'être mis en œuvre par fusion ou
- est un polyéther bloc amide thermoplastique, de préférence avec des composés amides entre des segments durs et mous ou
- est un élastomère thermoplastique ionomérique.

11. Installation selon l'une quelconque des revendications 1 à 10, **caractérisée en ce que** la bande de transport est fermée par une couture reliant deux extrémités de la bande de transport en une bande de transport continue, la couture étant une couture en spirale, qui comporte deux spirales de couture s'étendant sur toute la largeur de la bande de transport, qui sont respectivement entournées ou accrochées dans des boucles de fils longitudinaux respectivement des extrémités mutuellement opposées de la bande de transport, et les deux sont couplées l'une à l'autre au moyen d'un fil métallique de fermeture s'étendant sur toute la largeur de la bande de transport, de préférence les spirales de couture étant respectivement constituées d'un fil dont la section transversale comporte au moins deux zones, à savoir d'une part en forme d'une âme et d'autre part en forme d'une enveloppe enrobant l'âme, l'enveloppe étant constituée de préférence d'un élastomère thermoplastique.

12. Installation selon l'une quelconque des revendications 1 à 11, **caractérisée en ce que** la matière polymère des fils longitudinaux (4, 4', 4", 4'") contenant l'élastomère thermoplastique et/ou des fils transversaux fait preuve à l'égard de papier d'un coefficient de friction mesuré en appui sur la norme DIN 53375 compris entre 0,3 µ et 0,99 µ, de préférence entre 0,3 µ et 0,8 µ, de manière plus préférentielle, entre 0,4 µ et 0,7 µ.

13. Installation selon l'une quelconque des revendications 1 à 12, **caractérisée en ce qu'**au plus un fil longitudinal côté produit et/ou un fil transversal sur trois, de préférence au plus un sur quatre, de manière plus préférentielle au plus un sur six, de manière encore plus préférentielle, au plus un sur huit est constitué au moins dans des zones partielles de la surface qui fait face au côté produit d'une matière polymère, qui contient au moins une proportion d'un élastomère thermoplastique.

14. Procédé, destiné à fabriquer un crêpe, un voile ou un non-tissé, notamment par procédé de filé-lié ou de filage par fusion, au moyen d'une installation dédiée à la fabrication d'un crêpe, d'un voile ou d'un non-tissé, une nappe du crêpe, du voile, du non-tissé étant créée sur une surface d'une bande de transport et déplacée à cet effet, **caractérisé en ce que** le procédé est réalisé au moyen d'une installation selon l'une quelconque des revendications 1 à 13.

15. Utilisation d'une bande de transport (1, 1', 1") comportant un côté produit (PS) et un côté machine (MS) pour le transport d'une nappe d'un crêpe, d'un voile, d'un non-tissé pendant sa fabrication, notamment pendant sa création par voie d'un procédé de filé-lié ou de filage par fusion dans une installation selon l'une quelconque des revendications 1 à 13.
